# NEUE EUROPÄISCHE PATENTSCHRIFT

(11) **EP 1 499 510 B2**
(45) Veröffentlichungstag und Bekanntmachung des Hinweises auf die Entscheidung über den Einspruch: **14.10.2009**
(45) Hinweis auf die Patenterteilung: 28.12.2005
(21) Anmeldenummer: 03709607.0
(22) Anmeldetag: 12.02.2003
(51) Int. Cl.: B60G 7/00, F16F 1/393, F16C 11/06

(54) **DREIECKLENKER**
WISHBONE
TRIANGLE DE SUSPENSION

(30) Priorität: 02.05.2002 DE 10219708
(43) Veröffentlichungstag der Anmeldung: 26.01.2005
(73) Patentinhaber: ZF Lemförder GmbH, 49441 Lemförde (DE)
(72) Erfinder: BUHL, Reinhard, 49163 Bohmte (DE); RICHTER, Reinhard, 49163 Bohmte (DE); COSSMANN, Uwe, 49545 Tecklenburg (DE); KUNZE, Ralf, 49152 Bad Essen (DE); BUBLIES, Holger, 49078 Osnabrück (DE); KNOPP, Sören, 49179 Ostercappeln (DE)
(86) Internationale Anmeldenummer: PCT/DE2003/000418
(87) Internationale Veröffentlichungsnummer: WO 2003/093039

(56) Entgegenhaltungen:
- EP-A- 1 034 949
- EP-A- 1 103 739
- EP-A- 1 120 299
- WO-A-03//076218
- DE-A- 2 520 947
- DE-C1- 4 100 294
- DE-C1- 4 100 295
- DE-C1- 4 100 296
- US-A- 5 033 722
- US-A- 5 340 220
- US-B1- 6 231 264
- HABERHAUER UND BODENSTEIN: 'Maschinenelemente' Seite 166-213

## Beschreibung

Die Erfindung betrifft einen Dreiecklenker für die Achsaufhängung von Kraftfahrzeugen zur gelenkigen Verbindung einer Fahrzeugachse mit dem Fahrzeugrahmen gemäß den gattungsbildenden Merkmalen des Anspruches 1.

Derartige aus dem Stand der Technik bekannte Dreiecklenker werden insbesondere bei Nutzkraftfahrzeugen eingesetzt. So ist beispielsweise ein Führungslenker für eine Kraftfahrzeugradaufhängung bekannt, der aus einem zweiteiligen Lenkerkörper besteht, wobei die beiden Lenkerkörper an ihrem einen Ende eine gemeinsame Aufnahme für ein Gummi-Metalllager bilden, mit Hilfe dessen der Führungslenker an einem Radträger oder einer Achse festgelegt werden kann. Die gegenüberliegenden freien Enden dienen der karosserieseitigen Festlegung des Dreiecklenkers.

Derartige Lenker werden üblicherweise als Schmiede- oder Gussteile ausgebildet, wobei insbesondere bei Gussteilen im Rahmen der Gussformherstellung in der Draufsicht eine relativ große Fläche beansprucht wird, obwohl die eigentliche Masse der beiden Lenkerarme relativ gering ist. Insofern bietet die Zweiteilung des Dreiecklenkers in zwei Lenkerarme, die gegebenenfalls formgleich ausgeführt werden können, einen erheblichen Kostenvorteil, welcher sich ebenfalls bei der Ausführung des Dreiecklenkers als Schmiedeteil positiv bemerkbar macht, da durch die Zweiteilung eine erhebliche Reduzierung der Herstellschritte herbeigeführt werden kann.

Nachteilig bei dem in der oben genannten Schrift offenbarten Gegenstand ist jedoch, dass das innerhalb des durch die beiden Lenkerarme gemeinsam gebildeten zentralen Gelenkgehäuses angeordnete Gummi-Metalllager durch seine Bauform eine Vorspannung des für die elastische Lagerung zuständigen Elastomerkörpers nur in radialer Richtung vorsieht. Da Elastomerkörper allgemein nur äußerst geringe Zugspannungen aufnehmen können, ist das im Rahmen der Erfindung beschriebene Lager insofern für die Aufnahme von axialen Belastungen kaum geeignet.

Aufgabe der vorliegenden Erfindung ist es daher, einen Dreiecklenker der gattungsgemäßen Art so weiterzubilden, dass die insbesondere bei Nutzfahrzeugen auftretenden Beanspruchungen in gestiegenem Maße von der zentralen Lagerung des Dreiecklenkers für die daran angeschlossene Achse aufgenommen werden können.

Diese Aufgabe wird erfindungsgemäß durch die Merkmale des Anspruches 1 gelöst. Durch diese erfindungsgemäße Ausgestaltung lässt sich der insbesondere die Kugelfläche der Schwenkachse umgreifende Elastomerkörper nicht nur in radialer Richtung, sondern auch in axialer Richtung vorspannen. Diese Vorspannung ist ausschlaggebend für die Steifigkeit des Elastomerkörpers in axialer Richtung, wobei die Höhe der Steifigkeit dem Aufnahmevermögen für auftretende Axialkräfte proportional ist.

Ein weiterer Vorteil der Erfindung ist darin zu sehen, dass durch die Möglichkeit der axialen Vorspannung eine Einstellung des Gummi-Metalllagers an unterschiedliche Anforderungen durchgeführt werden kann, wohingegen bei herkömmlichen aus dem Stand der Technik bekannten Konstruktionen die verwendete Gummimischung des Elastomerkörpers für unterschiedliche Steifigkeiten gegebenenfalls geändert werden muss.

Bevorzugt sind die Andruckringe fest mit dem Elastomerkörper verbunden, wobei diese feste Verbindung z.B. durch Vulkanisieren/Anvulkanisieren ausgebildet sein kann. Das Vorspannen in axialer Richtung erfolgt über die Andruckringe.

Die Spannschraubverbindungen stellen eine konstruktiv einfache und kostengünstige Möglichkeit dar, die Andruckringe durch Zusammenschrauben der Lenkerarme im Bereich des gemeinsam gebildeten Gelenkgehäuses mit den nötigen Kräften vorzuspannen.

Ausreichende Spannkräfte werden hierbei beispielsweise durch drei oder mehr koaxial um die zentrale Ausnehmung für das Gummi-Metalllager angeordnete Spannschraubverbindungen bereitgestellt.

Um insbesondere bei sehr hohen Verwindungen der beiden Lenkerarme zueinander die dabei im Bereich der zentralen Gelenkgehäuseverbindung auftretenden Scherkräfte abzubauen und die dort befindlichen Spannschraubverbindungen nicht zu überlasten, hat es sich darüber hinaus als vorteilhaft erwiesen, zumindest eine der Spannschraubverbindungen mit einer innerhalb der dieser zugeordneten Durchgangsbohrung angeordneten, die Spannschraube umgreifenden Scherhülse zu versehen.

Es können aber auch alle Spannschraubverbindungen mit innerhalb der Durchgangsbohrungen angeordneten, die Spannschrauben umgreifenden Scherhülsen versehen sein.

Im Folgenden wird ein Ausführungsbeispiel des Gegenstandes der Erfindung anhand der beigefügten Zeichnungen näher erläutert.

Es zeigt:
- Figur 1: eine Draufsicht auf einen erfindungsgemäßen Dreiecklenker und
- Figur 2: eine Schnittdarstellung des Details B aus Figur 1 im Bereich des durch die beiden Lenkerarme gemeinsam gebildeten Gelenkgehäuses.

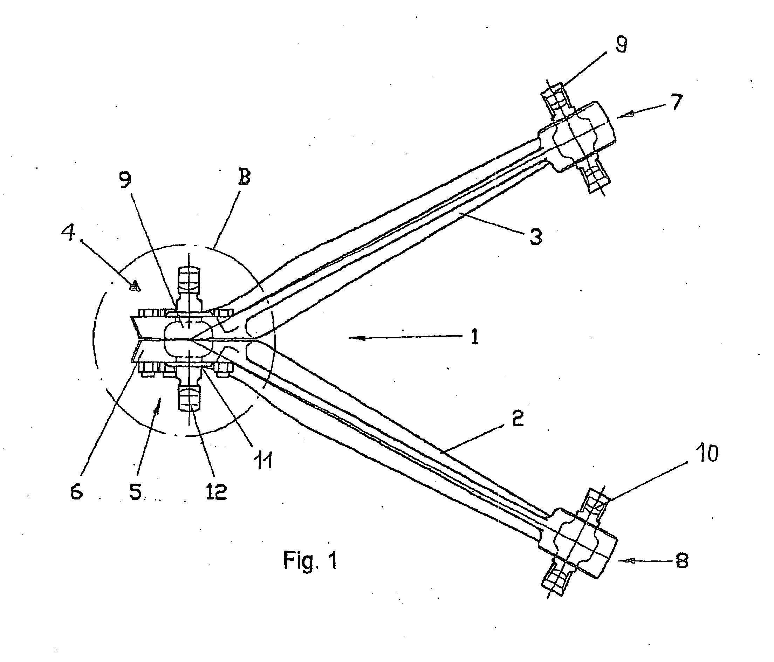

Der in seiner Gesamtheit mit 1 bezeichnete in der Figur 1 dargestellte Dreiecklenker weist zwei spiegelsymmetrische zueinander angeordnete Lenkerarme 2 und 3 auf. Jeder Lenkerarm besitzt einen gekröpften Endbereich 4 bzw. 5, die gemeinsam ein Gelenkgehäuse 6 bilden. Durch die Kröpfung der Endbereiche 4 und 5 und die in diesem Bereich aneinander liegenden Anlageflächen der Lenkerarme 2 und 3 ergibt sich für den gesamten Dreiecklenker eine im Wesentlichen vom Grundriss gesehen V-förmige Gestalt mit zwei Endbereichen 7 und 8, welche der Befestigung des Dreiecklenkers 1 an hier nicht näher dargestellten karosserieseitigen Aufnahmen dienen. Die Befestigung des Dreiecklenkers 1 ist hierbei mittels Gummi-Metalllagern 9 und 10 gelenkig ausgeführt. In das von den beiden Lenkerarmen 2 und 3 gebildete Gelenkgehäuse 6 ist ebenfalls ein Gummi-Metalllager 11 aufgenommen, welches eine gelenkige Verbindung zu einer an diesem befestigten - hier nicht näher dargestellten - Nutzkraftfahrzeugachse herstellt.

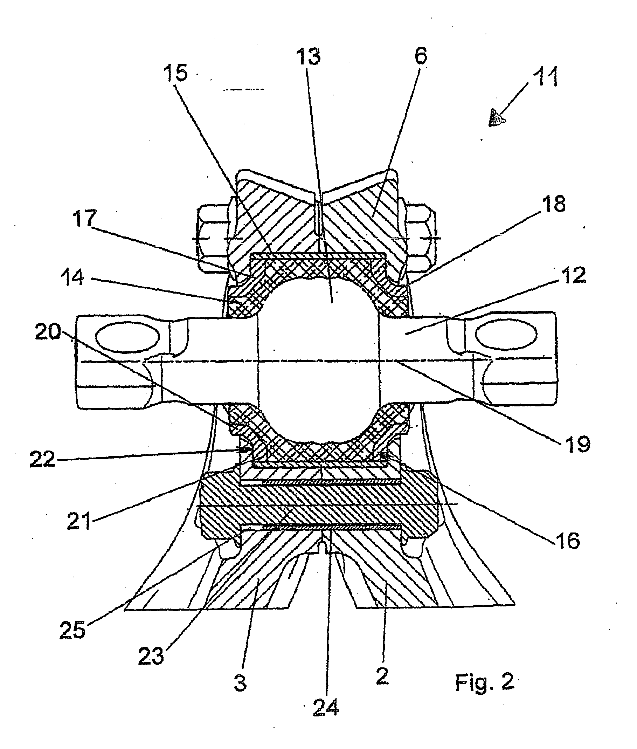

Das Gelenkgehäuse 6 mit dem darin befindlichen Gummi-Metalllager 11 ist in der Figur 2 in seiner speziellen Ausgestaltung näher dargestellt. Das Gummi-Metalllager 11 beinhaltet eine Schwenkachse 12 mit einem symmetrisch zu den Schwenkachsenenden angeordneten Kugelabschnitt 13. Der Kugelabschnitt 13 ist von einem ein- oder mehrteiligen Elastomerkörper 14 umgeben, welcher unter Zwischenschaltung einer Hülse 15 in einer Ausnehmung 16 des durch die Endbereiche der Lenkerarme 2 und 3 gebildeten Gelenkgehäuses 6 angeordnet ist. An den axialen Außenseiten des Elastomerkörpers 14 sind zwei Andruckringe 17 und 18 anvulkanisiert. Die Andruckringe 17 und 18 besitzen einen im Wesentlichen parallel zur Mittellängsachse 19 der Schwenkachse 12 angeordneten Flanschbereich 20 sowie einen rechtwinkelig dazu nach außen vorstehenden Flanschbereich 21. An der im Elastomerkörper 14 abgewandten Außenseite des Flanschbereiches 21 liegt an diesem eine Anschlagfläche 22 des Gelenkgehäuses 6 an.

Wie aus der Figur 2 zusätzlich ersichtlich wird, sind die beiden Lenkerarme 2 und 3 des Dreiecklenkers 1 über eine aus mehreren Spannschraubverbindungen 23 bestehende Spannvorrichtung miteinander verbunden. Zumindest eine Spannschraubverbindung besteht aus einer Spannschraube mit daran aufgeschraubter Mutter sowie einer die Spannschraube umgreifenden Scherhülse 24. Die zumindest eine Spannschraubverbindung 23 ist mit der die Spannschraube umgreifenden Scherhülse 24 innerhalb einer Durchgangsbohrung 25 des Gelenkgehäuses 6 angeordnet. Das Zusammenschrauben der Spannschraubverbindungen 23 führt dazu, dass das lose in die Ausnehmung 16 eingelegte Gummi-Metalllager 9 sowohl in radialer Richtung durch die Hülse 15 als auch in axialer Richtung durch die Andruckringe 17 und 18 festgelegt wird, wobei gleichzeitig der Elastomerkörper 14 mit Druckkräften beaufschlagt wird, wodurch eine Vorspannung des Bauteiles herbeigeführt wird und daraus resultierend die Steifigkeit des Elastomerkörpers 14 erhöht wird, so dass nach Beendigung der Montage durch eine Bewegung der Schwenkachse 12 hervorgerufene Druckkräfte auf den Elastomerkörper 14 problemlos aufgenommen werden können. Hierbei ist zu beachten, dass der Elastomerkörper 14 an der Schwenkachse 12 und an den Andruckringen 17, 18 mittels eines Vulkanisierprozesses festgelegt ist, die Verbindung zwischen Elastomerkörper 14 und Hülse 15 nur auf Grund entsprechender Reibungskräfte besteht.

### Bezugszeichenliste

- 1: Dreiecklenker
- 2: Lenkerarm
- 3: Lenkerarm
- 4: Endbereich
- 5: Endbereich
- 6: Gelenkgehäuse
- 7: Endbereich
- 8: Endbereich
- 9: Gummi-Metalllager
- 10: Gummi-Metalllager
- 11: Gummi-Metalllager
- 12: Schwenkachse
- 13: Kugelabschnitt
- 14: Elastomerkörper
- 15: Hülse
- 16: Ausnehmung
- 17: Andruckring
- 18: Andruckring
- 19: Mittellängsachse
- 20: Flanschbereich
- 21: Flanschbereich
- 22: Anschlagfläche
- 23: Spannschraubverbindung
- 24: Scherhülse
- 25: Durchgangsbohrung

## Patentansprüche

1. Dreiecklenker (1) für die Achsaufhängung von Kraftfahrzeugen zur gelenkigen Anbindung einer Fahrzeugachse an einen Fahrzeugrahmen mit zwei Lenkerarmen (2, 3), die in einem durch die Lenkerarme (2, 3) gemeinsam gebildeten Gelenkgehäuse (6) für ein Gummi-Metalllager (11) zur Festlegung des Dreiecklenkers (1) an der Fahrzeugachse miteinander verbunden sind, wobei das Gummi-Metalllager (11) eine mit einer Kugelfläche versehene Schwenkachse (12) und einen die Schwenkachse (12) zumindest im Bereich der Kugelfläche umgreifenden Elastomerkörper (14), welcher in einer innerhalb des Gelenkgehäuses (6) befindlichen Ausnehmung (16) aufgenommen ist, aufweist, wobei innerhalb der Ausnehmung (16) des Gelenkgehäuses (6) an den axialen Außenseiten des Elastomerkörpers (14) zwei Andruckringe (17, 18) angeordnet sind, welche durch eine Spannvorrichtung unter Zwischenschaltung von an den einander abgewandten Außenseiten der Andruckringe (17, 18) anliegenden Anschlagflächen (22) des Gelenkgehäuses (6) zueinander bewegbar sind, wobei die Spannvorrichtung mehrere parallel zur Schwenkachse (12) angeordnete, in Durchgangsbohrungen (25) des Gelenkgehäuses (6) aufgenommene Spannschraubverbindungen aufweist, **dadurch gekennzeichnet, dass** zumindest eine der Spannschraubverbindungen (23) mit einer innerhalb der dieser zugeordneten Durchgangsbohrung (25) angeordneten, die Spannschraube umgreifenden Scherhülse (24) versehen ist.

## Claims

1. Wishbone (1) for the axle suspension of motor vehicles for connecting a vehicle axle in an articulated manner to a vehicle frame comprising two control arms (2, 3), which are connected to one another in a joint housing (6) formed jointly by the control arms (2, 3) for a rubber-metal bearing (11) for fastening the wishbone (1) to the vehicle axle, wherein the rubber-metal bearing (11) comprises a swivelling axle (12) provided with a spherical surface as well as an elastomer body (14), which surrounds the swivelling axle (12) at least in the region of the spherical surface and is accommodated in a recess (16) situated inside the joint housing (6), wherein inside the recess (16) of the joint housing (6) there are disposed on the axially outer sides of the elastomer body (14) two press-on rings (17, 18), which are movable towards one another by means of a clamping apparatus with the agency of stop faces (22) of the joint housing (6), which lie against the mutually remote outer sides of the press-on rings (17, 18), wherein the clamping apparatus comprises a plurality of clamping screw connections, which are disposed parallel to the swivelling axle (12) and accommodated in through-bores (25) of the joint housing (6), **characterized in that** at least one of the clamping screw connections (23) is provided with a shear sleeve (24), which is disposed inside the through-bore (25) associated with said clamping screw connection and surrounds the clamping screw.

## Revendications

1. Triangle de suspension (1) pour la suspension d'essieux de véhicules automobiles en vue du montage articulé d'un essieu de véhicule sur un châssis de véhicule, comprenant deux branches de bras de suspension (2, 3) qui sont reliées l'une à l'autre au niveau d'un boîtier d'articulation (6) formé conjointement par les branches de bras de suspension (2, 3), recevant un palier métallo-caoutchouc (11) destiné à fixer le triangle de suspension (1) sur l'essieu du véhicule, le palier métallo-caoutchouc (11) comprenant un axe d'articulation (12) pourvu d'une surface sphérique, et un corps élastomère (14) entourant l'axe d'articulation (12) au moins au niveau de la surface sphérique, ce corps étant reçu dans une cavité (16) ménagée à l'intérieur du boîtier d'articulation (6) , dans lequel à l'intérieur de la cavité (16) du boîtier d'articulation (6), deux bagues de compression (17, 18) sont disposées sur les faces axiales extérieures du corps élastomère (14) et peuvent être rapprochées l'une de l'autre au moyen d'un dispositif de serrage, par l'intermédiaire de faces de butée (22) du boîtier d'articulation (6) qui appuient sur les faces opposées extérieures des bagues de compression (17, 18), dans lequel le dispositif de serrage présente plusieurs liaisons par vis de serrage disposées parallèlement à l'axe d'articulation (12), reçues dans des alésages traversants (25) du boîtier d'articulation (6), **caractérisé en ce que** au moins une des liaisons par vis de serrage (23) est pourvue d'une douille de cisaillement (24) disposée à l'intérieur de l'alésage traversant (25) coordonné à celle-ci, entourant la vis de serrage.
